# EUROPÄISCHE PATENTANMELDUNG

(11) **EP 2 073 609 A2**
(43) Veröffentlichungstag der Anmeldung: **24.06.2009**
(21) Anmeldenummer: 08105798.6
(22) Anmeldetag: 14.11.2008
(51) Int. Cl.: H05B 41/288

(54) **Schaltungsanordnung für das Betreiben einer Gasentladungslampe, Vorschaltgerät, sowie entsprechendes Verfahren**

(30) Priorität: 17.12.2007 DE 102007060775
(71) Anmelder: Robert Bosch GmbH, 70442 Stuttgart (DE)
(72) Erfinder: Palm, Stefan, 72076 Tuebingen (DE)

(57) **Zusammenfassung**

Die Erfindung betrifft eine Schaltungsanordnung für das Betreiben einer Gasentladungslampe an einer Gleichspannungsquelle, mit einem Gleichstrom-Gleichstrom-Wandler und einem Wechselrichter, wobei der Gleichstrom-Gleichstrom-Wandler die Spannung der Gleichspannungsquelle auf ein höheres Gleichspannungsniveau getaktet transformiert und die hohe Gleichspannung vom Wechselrichter in eine entsprechende Wechselspannung bestimmter Frequenz umgewandelt und damit die Gasentladungslampe betrieben wird. Es ist vorgesehen, dass zwischen dem Gleichstrom-Gleichstrom-Wandler (5) und dem Wechselrichter (6) eine feste Phasenbeziehung besteht.

Ferner betrifft die Erfindung ein Vorschaltgerät für eine Gasentladungslampe, gekennzeichnet durch eine Schaltungsanordnung (1) wie sie oben stehend beschrieben wurde.

Weiterhin betrifft die Erfindung ein entsprechendes Verfahren zum Betreiben einer Gasentladungslampe.

## Beschreibung

Die Erfindung betrifft eine Schaltungsanordnung für das Betreiben einer Gasentladungslampe an einer Gleichspannungsquelle, mit einem Gleichstrom-Gleichstrom-Wandler und einem Wechselrichter, wobei der Gleichstrom-Gleichstrom-Wandler die Spannung der Gleichspannungsquelle auf ein höheres Gleichspannungsniveau getaktet transformiert und die hohe Gleichspannung vom Wechselrichter in eine entsprechende Wechselspannung bestimmter Frequenz umgewandelt und damit die Gasentladungslampe betrieben wird.

Weiterhin betrifft die Erfindung ein Vorschaltgerät für eine Gasentladungslampe.

Ferner betrifft die Erfindung ein Verfahren zum Betreiben einer Gasentladungslampe an einer Gleichspannungsquelle, mit einem Gleichstrom-Gleichstrom-Wandler und einem Wechselrichter, wobei der Gleichstrom-Gleichstrom-Wandler die Spannung der Gleichspannungsquelle auf ein höheres Gleichspannungsniveau getaktet transformiert und die hohe Gleichspannung vom Wechselrichter in eine entsprechende Wechselspannung bestimmter Frequenz umgewandelt und damit die Gasentladungslampe betrieben wird.

### Stand der Technik

Schaltungsanordnungen für das Betreiben von Gasentladungslampen sowie Verfahren der eingangs genannten Art sind grundsätzlich bekannt. Gasentladungslampen sind Lichtquellen, die zur Lichterzeugung eine Gasentladung verwenden und dabei die spontane Emission durch atomare oder molekulare elektronische Übergänge und die Rekombinationsstrahlung eines durch elektrische Entladung erzeugten Plasmas ausnutzen. Schaltungsanordnungen zum Betreiben von Gasentladungslampen, insbesondere im Kraftfahrzeug, weisen in der Regel einen Gleichstrom-Gleichstrom-Wandler, im Folgenden DC/DC-Wandler genannt, zur Leistungseinprägung in die Gasentladungslampe, sowie einen Wechselrichter auf, der die Stromrichtung periodisch ändert, da die Gasentladungslampe keinen Gleichstrombetrieb zulässt. Neben dem DC/DC-Wandler und dem Wechselrichter selbst sind auch so genannte Wiederzündspitzen, die in der Gasentladungslampe auftreten, für EMV-Störungen (EMV=Elektromagnetische Verträglichkeit) verantwortlich. Diese sind breitbandige und dominante Störungen, die bis zu hohen Frequenzen wirksam sind. Die Wiederzündspitzen entstehen im Stromnulldurchgang in der Gasentladungslampe und sind in ihrer Intensität abhängig davon, in welchem Schaltzustand sich der DC/DC-Wandler befindet.

### Offenbarung der Erfindung

Die erfindungsgemäße Schaltungsanordnung reduziert die Intensität der Wiederzündspitzen signifikant dadurch, dass zwischen dem DC/DC-Wandler und dem Wechselrichter eine feste Phasenbeziehung besteht. Durch das Vorsehen der festen Phasenbeziehung wird ein nicht genutzter Freiheitsgrad der Schaltung verwendet, um eine der dominanten Quellen für EMV-Störungen/ - Störaussendungen zu reduzieren. Die Synchronisation der Phasen des DC/DC-Wandlers und des Wechselrichters, also des Taktes und der Frequenz, kann dabei unterschiedlich erfolgen, wichtig ist, dass die Phasenbeziehung einstellbar ist und somit eine in Bezug auf die Reduzierung von Wiederzündspitzen beziehungsweise deren Intensität optimale Phasenbeziehung gewählt werden kann.

Nach einer vorteilhaften Weiterbildung der Erfindung ist vorgesehen, dass der Wechselrichter als Vollbrücke ausgebildet ist. Vorteilhafterweise ist dabei die Gasentladungslampe in Reihe mit einem Zündgerät 16 geschaltet.

Weiterhin ist vorgesehen, dass der DC/DC-Wandler mindestens ein Halbleiterelement aufweist. Zweckmäßigerweise ist das Halbleiterelement als IGBT (Insulated Gate Bipolar Transistor = Bipolarer Transistor mit isolierter Gateelektrode) oder als MOSFET (Metal Oxide Semiconductor Field Effect Transistor = Metall-Oxid-Halbleiter-Feldeffekttransistor) ausgebildet.

Nach einer Weiterbildung der Erfindung weist die Schaltungsanordnung zumindest eine Takterfassungseinrichtung zur Erfassung des Taktes des DC/DC-Wandler auf. Mittels der Takterfassungseinrichtung wird der (Arbeits-) Takt, mit dem der DC/DC-Wandler die Spannung der Gleichspannungsquelle auf ein höheres Gleichspannungsniveau transformiert, erfasst. In Abhängigkeit von dem erfassten Takt kann dann der Wechselrichter derart angesteuert werden, dass seine (Arbeits-) Frequenz, mit der er die Gleichspannung in eine entsprechende Wechselspannung umwandelt, zu einer Reduzierung der Wiederzündspitzen führt, wobei zwischen dem DC/DC-Wandler und dem Wechselrichter eine feste Phasenbeziehung besteht.

Vorteilhafterweise ist die Takterfassungseinrichtung als Schmitt-Trigger ausgebildet oder weist mindestens einen Schmitt-Trigger auf. Der Schmitt-Trigger ist eine elektronische Schaltung mit einem Komperator, bei dem die Einbeziehungsweise Ausschaltschwellen nicht zusammenfallen, sondern um eine Schalthysterese gegeneinander versetzt sind. Um eindeutige Schaltzustände aus einem analogen Signalverlauf zu gewinnen, erzeugt der Schmitt-Trigger digitale Signale. Er funktioniert als Schwellenwertschalter, wobei bei Überschreiten einer bestimmten im Schmitt-Trigger einstellbaren Schwellspannung sein Ausgangssignal bei der nicht invertierenden Ausführung die maximal mögliche Ausgangspannung (logisch-1) annimmt, im anderen Fall die minimal mögliche Ausgangspannung (logisch-0). Der Schmitt-Trigger kann auch als diskrete Schaltung mit MOSFET bzw. bipolarer Transistoren realisiert werden. Zweckmäßigerweise ist der Schmitt-Trigger elektrisch mit dem DC/DC-Wandler verbunden, so dass er auf Basis eines DC/DC-Wandler-Ausgangssignals ein entsprechendes Taktsignal ausgibt.

Weiterhin ist mit Vorteil vorgesehen, dass zum Einstellen der Frequenz des Wechselrichters letzterem ein Steuer-Oszillator zugeordnet ist. Bevorzugt ist der Ausgang des Schmitt-Triggers mit dem Steuer-Oszillator verbunden. Mittels des Ausgangssignals des Schmitt-Triggers wird hierbei der Steuer-Oszillator, insbesondere die Frequenz des Steuer-Oszillators beeinflusst beziehungsweise gesteuert. Hierdurch wird es ermöglicht, die Phasenbeziehung zwischen DC/DC-Wandler und Wechselrichter einzustellen. Vorteilhafterweise wird der Pegel beziehungsweise die Schwellspannung zur Schaltung des Wechselrichters im Minimum für EMV-Störungen/-Störemissionen vorgegeben.

Das erfindungsgemäße Vorschaltgerät für eine Gasentladungslampe ist durch eine Schaltungsanordnung, wie sie oben beschrieben wurde, gekennzeichnet.

Das erfindungsgemäße Verfahren zum Betreiben einer Gasentladungslampe an einer Gleichspannungsquelle ist dadurch gekennzeichnet, dass zwischen dem DC/DC-Wandler und dem Wechselrichter eine feste Phasenbeziehung eingestellt wird. Dies führt zu einer Reduzierung, insbesondere der Intensität, von Wiederzündspitzen, die im Betrieb in der Gasentladungslampe auftreten können.

Vorteilhafterweise wird als Wechselrichter eine Vollbrücke verwendet. Als DC/DC-Wandler wird zweckmäßigerweise ein DC/DC-Wandler mit Halbleiterelementen beziehungsweise ein Halbleiter-DC/DC-Wandler verwendet. Dieser verwendet insbesondere mehrere IGBT-Transistoren oder MOSFET-Bausteine als elektrische Schalter.

Weiterhin sieht das Verfahren vor, dass der Takt des DC/DC-Wandlers mittels mindestens einer Takterfassungseinrichtung, besonders bevorzugt mittels eines Schmitt-Triggers ermittelt wird. Hierbei wird also der (Arbeits-) Takt erfasst, mit dem der DC/DC-Wandler die von der Gleichspannungsquelle erzeugte Gleichspannung auf ein höheres Gleichspannungsniveau transformiert. Wobei der erfasste/ermittelte Takt einen Rückschluss auf den Schaltzustand des DC/DC-Wandlers zulässt.

Bevorzugt wird der Wechselrichter von dem Schmitt-Trigger angesteuert. Dabei wird vorteilhafterweise die Frequenz des Wechselrichters mittels eines Steuer-Oszillators eingestellt. Wobei besonders bevorzugt dem Steuer-Oszillator ein beziehungsweise das Ausgangssignal des Schmitt-Triggers zugeführt wird, wodurch die feste Phasenbeziehung zwischen dem DC/DC-Wandler und dem Wechselrichter eingestellt wird. Die Phasenbeziehung wird zweckmäßigerweise derart eingestellt, dass die Intensität der Wiederzündungsspitzen reduziert wird.

### Kurze Beschreibung der Zeichnungen

Im Folgenden soll die Erfindung anhand einiger Zeichnungen näher erläutert werden. Dazu zeigen
- Figur 1: eine schematische Darstellung einer vorteilhaften Schaltungsanordnung zum Betreiben einer Gasentladungslampe und
- Figur 2: eine schematische Darstellung eines Wechselrichters für eine Gasentladungslampe.

### Ausführungsform(en) der Erfindung

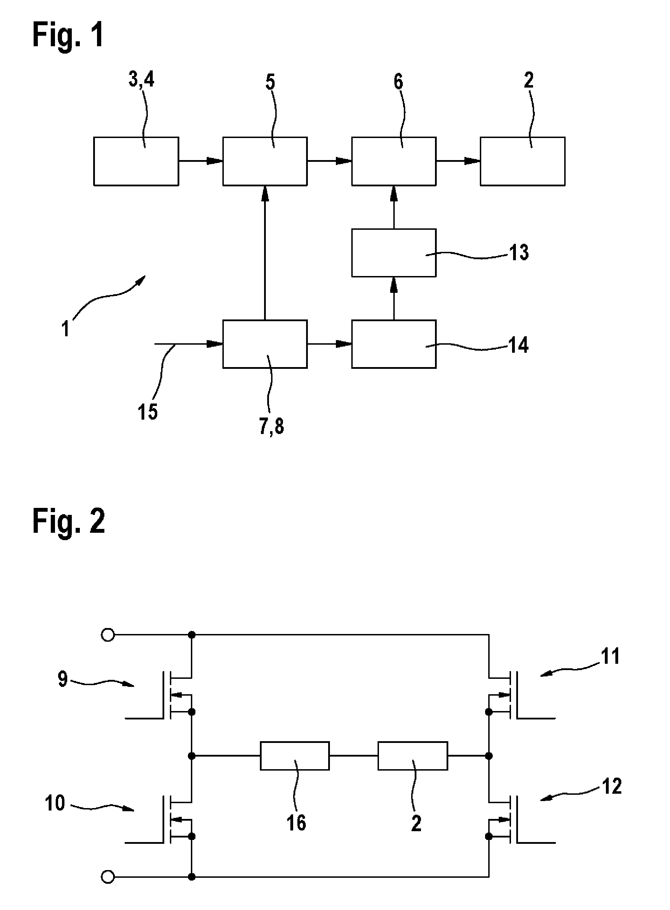

Die Figur 1 zeigt in einer schematischen Darstellung eine vorteilhafte Schaltungsanordnung 1 zum Betreiben einer Gasentladungslampe 2 an einer Gleichspannungsquelle 3, die im vorliegenden Ausführungsbeispiel von einem Bordnetz 4 eines hier nicht näher dargestellten Kraftfahrzeugs gebildet wird. Die Gleichspannungsquelle 3 ist mit einem Gleichstrom-Gleichstrom-Wandler 5, der auch als Gleichstromsteller, DC-DC-Steller oder getakteter Spannungssteller bezeichnet wird, verbunden, wobei der Gleichstrom-Gleichstrom-Wandler 5, im Folgenden DC/DC-Wandler 5 genannt, zur Leistungseinprägung in die Gasentladungslampe 2 dient und die Spannung der Gleichspannungsquelle 3 auf ein höheres Gleichspannungsniveau getaktet transformiert. Die vom DC/DC-Wandler 5 erzeugte Gleichspannung wird von einem Wechselrichter 6 der Schaltungsanordnung 1 in eine entsprechende Wechselspannung mit einer bestimmten Frequenz umgewandelt, mit welcher letztendlich die Gasentladungslampe 2 betrieben wird. Der Wechselrichter 6 ändert dazu die Stromrichtung periodisch, da die Gasentladungslampe 2 keinen Gleichstrombetrieb zulässt. Der DC/DC-Wandler 5 wird in dem vorliegenden Ausführungsbeispiel mit einem Takt von 100 kHz und der Wechselrichter 6 mit einer Frequenz von ca. 400 kHz betrieben.

Vorschaltgeräte von Kraftfahrzeugen, die eine derartige Schaltungsanordnung 1 aufweisen, erfordern für die Einhaltung der EMV-Grenzwerte entsprechend der Automobilhersteller einen erheblichen Aufwand, in der Regel durch Filter und auch durch Schirmung von Leitungen zwischen Vorschaltgerät und Gasentladungslampe 2. Filter und Schirmung dienen dabei jedoch nur der Beeinflussung des Koppelpfades und haben sonst keine Funktionalität.

Bekannte Schaltungsanordnungen zum Betreiben der Gasentladungslampe 2 an der Gleichspannungsquelle 3 beziehungsweise bekannte Verfahren zum Betreiben der Gasentladungslampe 2 führen zu so genannten Wiederzündspitzen in der Gasentladungslampe 2, die sich neben dem DC/DC-Wandler 5 und dem Wechselrichter 6 selbst als EMV-Störungen auf die Elektronik des Kraftfahrzeugs auswirken. Diese Wiederzündspitzen sind breitbandige und dominante Störungen, die bis zu hohen Frequenzen wirksam und in ihrer Intensität davon abhängig sind, in welchem Schaltzustand sich der DC/DC-Wandler 5 befindet. Sie haben in der Regel ein ausgesprochen statistisches Verhalten.

Die Figur 2 zeigt schematisch einen beispielhaften Aufbau des Wechselrichters 6 der Gasentladungslampe 2. Die Gasentladungslampe 2 ist mit einem Zündgerät 8 in Reihe geschaltet. Gesteuert/geschaltet wird der Wechselrichter 6, der vorteilhafterweise als Vollbrücke ausgebildet ist, mittels vier Halbleiter-Schaltern 9 bis 12. Die Halbleiter-Schalter 9 bis 12, vorzugsweise als MOSFET-Schalter ausgebildet, werden von einer Ansteuereinheit 13 betrieben, wie in der Figur 1 dargestellt. Diese Ansteuereinheit 13 steuert die Halbleiter-Schalter 9 bis 12 des Wechselrichters 6 in Abhängigkeit von einem Signal eines Steuer-Oszillators 14 an, wie ebenfalls in der Figur 1 dargestellt. Der Steuer-Oszillator 14 kann dabei sowohl als eigenständige Einheit oder auch als integrierter Bestandteil des Wechselrichters ausgebildet sein.

Die vorteilhafte Schaltungsanordnung 1 weist weiterhin eine Takterfassungseinrichtung 7 auf, die dazu dient, den Schaltzustand des DC/DC-Wandlers 5 zu ermitteln. Dazu ist die Takterfassungseinrichtung 7 mit dem DC/DC-Wandler 5 verbunden. In dem vorliegenden Ausführungsbeispiel ist die Takterfassungseinrichtung 7 vorteilhafterweise als Schmitt-Trigger 8 ausgebildet oder weist diesen auf. Dem Schmitt-Trigger 8 wird das Signal des DC/DC-Wandlers 5 zugeführt. Der Schmitt-Trigger 8 funktioniert als Schwellenwertschalter zur Gewinnung eindeutiger Schaltzustände aus einem Signalverlauf - in diesem Fall aus dem Signalverlauf des DC/DC-Wandlers 5 -, wobei bei Überschreiten einer bestimmten im Schmitt-Trigger 8 eingestellten Schwellspannung das digitale Ausgangssignal des Schmitt-Triggers 8 bei einer nicht-invertierten Ausführung die maximal mögliche Ausgangsspannung (logisch-1) und im anderen Fall die minimal mögliche Ausgangsspannung (logisch-0) annimmt. Mittels des Schmitt-Triggers 8 wird hierbei also auf besonders einfache Art und Weise der Schaltzustand, und damit der (Arbeits-) Takt des DC/DC-Wandlers 5 erfasst. Der Schwellwert beziehungsweise der Pegel zur Schaltung des Wechselrichters 6 wird im Minimum für EMV-Störungen/-Störemissionen vorgegeben, wie durch einen Pfeil 15 angedeutet.

Das vom Schmitt-Trigger 8 beziehungsweise von der Takterfassungseinrichtung 7 erzeugte Ausgangssignal wird dem Steuer-Oszillator 14 zugeführt, wodurch der Steuer-Oszillator 14 in Abhängigkeit von dem Ausgangssignal des Schmitt-Triggers 8 beziehungsweise in Abhängigkeit vom (Arbeits-) Takt beziehungsweise Schaltzustand des DC/DC-Wandlers 5 angesteuert/betrieben wird. Hierdurch wird das Einstellen einer festen Phasenbeziehung beziehungsweise einer einstellbaren Synchronisation zwischen dem DC/DC-Wandler 5 und dem Wechselrichter 6 ermöglicht. Die Ansteuerung des Wechselrichters 6 beziehungsweise die (Arbeits-) Frequenz des Wechselrichters 6 kann nunmehr in Abhängigkeit von dem Schaltzustand des DC/DC-Wandlers 5 eingestellt werden. Wobei die Phasenbeziehung beispielsweise in Abhängigkeit vom jeweiligen Anwendungsfall oder von der zu betreibenden Gasentladungslampe 2 unterschiedlich eingestellt wird. Die Einstellung erfolgt dabei insbesondere durch die entsprechende Vorgabe der Schwellspannung des Schmitt-Triggers 8.

Durch die vorteilhafte Vorrichtung 1 beziehungsweise durch das vorteilhafte Verfahren wird insbesondere die Intensität der Wiederzündspitzen im Stromnulldurchgang in der Gasentladungslampe 2 reduziert. Exemplarisch liegt hier bei einer Zeitbereichsbetrachtung und einer Frequenzbereichsbetrachtung zwischen minimaler und maximaler Störspannung (Wiederzündspitze) ein Faktor 3 beziehungsweise 10dB. Da bei der Bewertung von EMV-Störungen das Maximum bewertet wird, liegt dann der Erwartungswert der zu erreichenden Verbesserung also bei Faktor 3 oder 10dB.

## Patentansprüche

1. Schaltungsanordnung für das Betreiben einer Gasentladungslampe an einer Gleichspannungsquelle, mit einem Gleichstrom-Gleichstrom-Wandler und einem Wechselrichter, wobei der Gleichstrom-Gleichstrom-Wandler die Spannung der Gleichspannungsquelle auf ein höheres Gleichspannungsniveau getaktet transformiert und die hohe Gleichspannung vom Wechselrichter in eine entsprechende Wechselspannung bestimmter Frequenz umgewandelt und damit die Gasentladungslampe betrieben wird, **dadurch gekennzeichnet, ]dass** zwischen dem Gleichstrom-Gleichstrom-Wandler (5) und dem Wechselrichter (6) eine feste Phasenbeziehung besteht.

2. Schaltungsanordnung nach Anspruch 1, **dadurch gekennzeichnet, dass** der Wechselrichter (6) als Vollbrücke ausgebildet ist.

3. Schaltungsanordnung nach einem der vorhergehenden Ansprüche, **dadurch gekennzeichnet, dass** der Gleichstrom-Gleichstrom-Wandler (5) mindestens ein Halbleiterelement (9,10,11,12) aufweist.

4. Schaltungsanordnung nach einem der vorhergehenden Ansprüche, **gekennzeichnet durch** zumindest eine Takterfassungseinrichtung (7) zur Erfassung des Taktes des Gleichstrom-Gleichstrom-Wandlers (5).

5. Schaltungsanordnung nach einem der vorhergehenden Ansprüche, **dadurch gekennzeichnet, dass** die Takterfassungseinrichtung (7) als Schmitt-Trigger (8) ausgebildet ist oder mindestens einen Schmitt-Trigger (8) aufweist.

6. Schaltungsanordnung nach einem der vorhergehenden Ansprüche, **dadurch gekennzeichnet, dass** zum Einstellen der Frequenz dem Wechselrichter (6) ein Steuer-Oszillator (14) zugeordnet ist.

7. Schaltungsanordnung nach einem der vorhergehenden Ansprüche, **dadurch gekennzeichnet, dass** ein Ausgang des Schmitt-Triggers (8) mit dem Steuer-Oszillator (14) verbunden ist.

8. Vorschaltgerät für eine Gasentladungslampe, **gekennzeichnet durch** eine Schaltungsanordnung (1) nach einem der vorhergehenden Ansprüche.

9. Verfahren zum Betreiben einer Gasentladungslampe an einer Gleichspannungsquelle, mit einem Gleichstrom-Gleichstrom-Wandler und einem Wechselrichter, wobei der Gleichstrom-Gleichstrom-Wandler die Spannung der Gleichspannungsquelle auf ein höheres Gleichspannungsniveau getaktet transformiert und die hohe Gleichspannung vom Wechselrichter in eine entsprechende Wechselspannung bestimmter Frequenz umgewandelt und damit die Gasentladungslampe betrieben wird, **dadurch gekennzeichnet, dass** zwischen dem Gleichstrom-Gleichstrom-Wandler und dem Wechselrichter eine feste Phasenbeziehung eingestellt wird.

10. Verfahren nach Anspruch 9, **dadurch gekennzeichnet, dass** als Wechselrichter eine Vollbrücke verwendet wird.

11. Verfahren nach einem der vorhergehenden Ansprüche, **dadurch gekennzeichnet, dass** als Gleichstrom-Gleichstrom-Wandler ein Gleichstrom-Gleichstrom-Wandler mit Halbleiterelementen verwendet wird.

12. Verfahren nach einem der vorhergehenden Ansprüche, **dadurch gekennzeichnet, dass** zur Erfassung des Taktes des Gleichstrom-Gleichstrom-Wandlers mindestens eine Takterfassungseinrichtung verwendet wird.

13. Verfahren nach einem der vorhergehenden Ansprüche, **dadurch gekennzeichnet, dass** als Takterfassungseinrichtung mindestens ein Schmitt-Trigger verwendet wird.

14. Verfahren nach einem der vorhergehenden Ansprüche, **dadurch gekennzeichnet, dass** die Frequenz des Wechselrichters mittels eines Steuer-Oszillators eingestellt wird.

15. Verfahren nach einem der vorhergehenden Ansprüche, **dadurch gekennzeichnet, dass** zum Einstellen der Frequenz dem Steuer-Oszillator ein Ausgangssignal des Schmitt-Triggers zugeführt wird.
